# EUROPÄISCHE PATENTSCHRIFT

(11) **EP 0 791 524 B1**
(45) Veröffentlichungstag und Bekanntmachung des Hinweises auf die Patenterteilung: **04.11.1998**
(21) Anmeldenummer: 96102701.8
(22) Anmeldetag: 22.02.1996
(51) Int. Cl.: B62D 7/22, B62D 6/00, F16F 9/53, F16F 9/12

(54) **Lenkventil**
Steering valve
Soupape de direction

(43) Veröffentlichungstag der Anmeldung: 27.08.1997
(73) Patentinhaber: TRW Fahrwerksysteme GmbH & Co. KG, 40547 Düsseldorf (DE)
(72) Erfinder: Gerigk, Hans-Willi Dipl.-Ing., D-46145 Oberhausen (DE)
(74) Vertreter: Stenger, Watzke & Ring Patentanwälte

(56) Entgegenhaltungen:
- EP-A- 0 442 570
- DE-A- 3 302 953
- FR-A- 2 592 449
- US-A- 2 234 975

## Beschreibung

Die Erfindung betrifft ein Lenkventil zur Versorgung eines Stellgliedes mit Hydraulikdruck, bestehend aus einer in einem Gehäuse angeordneten Eingangswelle, einer Ausgangswelle, einem zentrierenden Federelement und einem Ventilelement.

Lenkventile der gattungsgemäßen Art werden insbesondere in Servolenk-Systemen eingesetzt. Der Aufbau derartiger Servolenk-Systeme ist an sich bekannt. Eine mit einer Lenkstange verbundene Eingangswelle ist über ein zentrierendes Federelement mit einer mit einem Ritzel versehenen Ausgangswelle verbunden. Das Ritzel wirkt auf die Zahnstange einer Lenkung. Für derartige Lenksysteme ist die Verwendung von Lenkventilen bekannt. Dazu ist in bekannter Weise ein Drehschieber-Ventilelement vorgesehen, welches bei relativer Verdrehung der Eingangswelle zur Ausgangswelle in Bohrungen endende Hydraulikführungen miteinander verbindet bzw. voneinander trennt. Von einer Pumpe wird Hydraulikflüssigkeit unter Druck durch das System gepumpt. Bei einer relativen Verdrehung der Eingangswelle zur Ausgangswelle wird Hydraulikdruck einem Hydraulikmotor zugeführt, welcher die Zahnstangenbewegung in eine der beiden möglichen Richtungen unterstützt.

Die Aktivierung derartiger Lenkventile erfolgt durch das Verdrehen der Eingangswelle gegenüber der Ausgangswelle, wobei durch das dazwischen angeordnete zentrierende Federelement, beispielsweise einen Torsionsstab, ein Torsionsmoment überwunden werden muß.

Bei einem Typ von Lenkventilen ist in bekannter Weise eine Ventilhülse vorgesehen, welche mit der Ausgangswelle in Eingriff steht und die Eingangswelle umgibt. Diese Ventilhülse weist Steuernuten auf, die mit von außerhalb eines Gehäuses hindurchgeführten Bohrungen für die Hydraulikmittelführung zur Steuerung in Deckung bringbar sind.

Ein anderer Typ von Lenkventilen ist bekannt, wobei im wesentlichen axial liegende Bohrungen miteinander in Deckung gebracht werden.

Bei gattungsgemäßen Lenkventilen besteht ein bekanntes Problem in Form von Drehschwingungen. Diese resultieren in erster Linie aus von den Fahrzeugrädern übertragenen Fahrbahnanregungen, sowie aus Druckpulsationen, die sich in einer zitternden Relativbewegung zwischen der Eingangswelle und der Ausgangswelle bzw. dem Ventilelement bemerkbar macht. Dies kann bishin zu einem Rattern des Lenkrades eines Lenksystems gehen und erzeugt darüber hinaus unangenehme Geräusche.

Im Stand der Technik sind eine Reihe von Lösungen bekannt, um diese Problematik in den Griff zu bekommen. In der WO91/13790 wird ein besonderes Dehnschlauchsystem vorgeschlagen, um die Druckpulsationen zu kompensieren. In der DE 27 55 598 A1 wird vorgeschlagen, dem Hydraulikmedium Luft beizumischen. In der DE 40 23 709 A1 wird die zusätzliche Anordnung von Dämpfervolumen vorgeschlagen. Schließlich offenbart die DE 29 18 475 A1 die Verwendung eines Hydromotors zwischen Pumpe und Lenkventil.

Durch die vorbekannten Lösungen werden gattungsgemäße Lenkungssysteme aufwendig bezüglich des Materialbedarfs und der Montage- und Einstellarbeiten und können nur mit großem wirtschaftlichen Aufwand erstellt werden. Es sind jeweils zusätzliche Bauelemente erforderlich, die sämtlichst außerhalb des Lenkventils zu verwenden sind und dennoch eine Drehschwingung nicht grundsätzlich vollständig ausschließen können.

Gebrauch finden vielfach auch zwischen den sich relativ zueinander auslenkenden Ventilkomponenten, Steuerhülse und Eingangswelle, eingebaute Ringe aus Polymerwerkstoff, die meist mit Systemdruck beaufschlagt werden können, und durch Coloumb'sche Reibung ein Reibmoment zwischen den relativ zueinander bewegten Ventilkomponenten entstehen lassen, welches bei Drehschwingungen dämpfend wirken soll. Diese Lösung besitzt den Nachteil, durch Coloumb'sche Reibung die Ventilcharakteristik negativ zu beeinflussen, und ferner Komponenten in Form von Polymerringen zu verwenden, die ihre Charakteristik durch Verschleiß und Materialalterung über die Lebensdauer eines Lenkgetriebes verändern.

Ferner beschreibt die US-PS 4,352,304 die Ausführung eines viskosen Dämpfens der Lenksäule. Ritzel- und Eingangswelle sind jeweils mit einem rotatorisch ausgebildetem Körper verbunden, die relativ zueinander, in Umfangsrichtung zur Wellenachse, Spalte bilden, die mit einem viskosen Fluid gefüllt sind. Bei relativen Drehschwingungen beider Wellen, und Somit beider spaltbildender Körper zueinander, entstehen im, in den Spalten befindlichen, viskosen Fluid Schwerkräfte, die an den Oberflächen der Körper wirkend, Dämpfungsmomente entstehen lassen. Um starke Instabilitäten, wie im aktuell geforderten Falle, mit dem Prinzip der Fluidscherung erfolgreich dämpfen zu können, bedarf es Spaltflächen nicht realisierbarer Größe.

In der DE 28 33 009 A1 ist eine Lösung offenbart, bei der zur Dämpfung von "ratterndem Vibrieren" durch druckbeaufschlagte Radialkolben eine Coloumb'sche Reibungskraft an in Umfangsrichtung um die Ventilachse orientierten Zylinderflächen erzeugt wird. Auch dieses Dämpfungsprinzip basiert auf den die Ventilcharakteristik negativ beeinflussenden Coloumb'schen Reibungskräften.

Es wurde bereits vorgeschlagen, Hydraulikdruck beaufschlagbare Kammern anzuordnen, in welchen Kolbenelemente bewegbar sind, wobei Kammer und Kolbenelement mit jeweils einem anderen relativ verdrehbaren Element verbunden sind. Somit wurde die zusätzliche Anordnung eines Dämpfers vorgeschlagen, was jedoch eine Baulängenveränderung mit sich bringt, die neben den wirtschaftlichen Nachteilen auch einen Nachteil hinsichtlich des Einsatzbereiches mit sich bringt. Die Baulänge ist ein sensibler Parameter bei Servolenkventilen.

Davon ausgehend liegt der vorliegenden Erfindung die **Aufgabe** zugrunde, ein Lenkventil der gattungsgemäßen Art dahingehend weiterzubilden, daß dieses einfach und wirtschaftlich sowie ohne Baulängenvergrößerung aufgebaut und gegen Drehschwingungen unempfindlich ist.

Zur technischen **Lösung** dieser Aufgabe wird das gattungsgemäße Lenkventil dadurch weitergebildet, daß das Lenkventil wenigstens eine kreisbogenförmig verlaufende, im wesentlichen koaxiale und mit Fluid gefüllte Kammer aufweist, in welcher wenigstens ein Kolbenelement auf einer im wesentlichen kreisförmigen Bahn bewegbar angeordnet ist, wobei die Kammer und/oder das Kolbenelement ein Teil eines zwischen einer der Wellen und dem Gehäuse angeordneten Lagers bilden.

Mit der erfindungsgemäßen Ausgestaltung wird ein einfach aufgebauter Drehschwingungsdämpfer an einem Servolenkventil der gattungsgemäßen Art angeordnet. Dieser besteht aus wenigstens einer kreisförmigen Kammer und einem darin auf einer im wesentlichen kreisförmigen Bahn bewegbaren Kolbenelement. Die Kammern sind mit viskosem Fluid gefüllt, vorzugsweise mit dem eingesetzten Getriebeöl. Drehschwingungen werden durch den sich bei einer Relativbewegung von Kolben- und Kammerelement ergebenden Druckaufbau in der Kammer und einer daraus resultierenden Kraft am Kolben und somit einem Moment auf die Eingangswelle, welches von seiner Orientierung der Drehschwingung entgegengerichtet ist, gedämpft. Direkt oder indirekt mit den Elementen verbunden bedeutet, daß weitere zusätzliche Elemente zwischengeschaltet sein können. Vorzugsweise ist die Eingangswelle über eines der beiden Dämpferteile mittels eines Lagers gelagert, so daß für Lager und Drehschwingungsdämpfer quasi eine integrierte Designlösung gefunden worden ist. Die Kammer und der Kolben sind in einem der ohnehin für die Eingangswelle oder die Ausgangswelle benötigten Lager integriert oder axial parallel angeordnet, so daß keine Baulängenvergrößerung aufgrund der Verwendung eines zusätzlichen Dämpfers erforderlich ist. Integriert im Sinne der vorliegenden Erfindung bedeutet, daß das Dämpfersystem in dem Lager untergebracht oder axial parallel zu ihm angeordnet ist, ohne daß die Lagereigenschaften dabei verloren gehen.

Mit der Integrierung oder axialen Parallelschaltung des Drehschwingungsdämpfers in ein bzw. zu einem Lager ist nicht zwingend gemeint, daß ein an sich handelsübliches Lager durch Umbauen mit einem Drehschwingungsdämpfer der erfindungsgemäßen Art versehen wird, sondern es ist auch im Sinne der Erfindung, wenn ein die Kammer bildendes Element und ein kolbentragendes Element mit zusätzlichen Elementen zu einem Drehschwingungsdämpfer montierbar sind, der auch mit Lagereigenschaften versehen zwischen einer der Wellen und dem Gehäuse angeordnet werden kann. Es versteht sich von selbst, daß ein Kammerelement und Kolbenelement gegeneinander derart gelagert werden, daß das Gesamtbauteil seine bestimmungsgemäße Funktion sowohl als Drehschwingungsdämpfer als auch als Lager erfüllen kann.

Wesentlich ist für die vorliegende Erfindung weiterhin, daß die Dämpfungseigenschaften des erfindungsgemäßen Drehschwingungsdämpfers nicht von dem im Lenkventil herrschenden Systemdruck abhängig sind, sondern von der geometrischen Ausbildung der Dämpferteile, insbesondere deren Spaltweiten und Wirkflächen; ferner der Drehschwingungsfrequenz und -amplitude, sowie der Viskosität oder Dichte des Dämpferfüllfluids. Idealerweise bilden Ringzylinder- und Ringkolbenelement ein abgeschlossenes System, so daß das Füllfluid beim relativen Verdrehen beider Dämpferelemente durch die Leckagespalte zwischen Kolben- und Zylinderelement aufgrund des Druckanstiegs in der sich verkleinernden Kammer von dieser in die sich vergrößernde Kammer strömt. Der hierbei unterschiedliche Druckaufbau in den Kammern übt an den Kolbenelementen eine Kraft aus, die bezüglich der Ventilachse ein Moment auf die Eingangswelle ausübt, welches den Instabilitäten entgegengerichtet ist und sie somit dämpft. Zur einfacheren Befüllung der Dämpferkammer mit viskosem Fluid kann auch durch Leckagespalte zwischen Ringzylinder- und Ringkolbenelement zur Umgebung eine Inititalbefüllung der Kammer mit Lenkgetriebefluid erfolgen. Der auch im weiteren Betrieb verbleibende und ggf. toleranzbedingte Leckagestrom mindert jedoch das Dämpfungsvermögen, ist also prinzipiell unerwünscht. Das Wirkprinzip des hier vorgestellten Drehschwingungsdämpfers ist also rein hydraulisch, sich selbst bei hochfrequenter Relativauslenkung seiner Bauteile druckbeaufschlagend; also vom Lenkgetriebebetriebsdruck und von Lenkventilsteuervorgängen unabhängig wirkend. Sein Vorteil ist sein hohes Dämpfungsvermögen bei Nichtbeeinflussung der Ventilcharakteristik.

Gemäß einem vorteilhaften Vorschlag der Erfindung ist die wenigstens eine Hydraulikdruck beaufschlagbare Kammer eine Ringkammer. Diese ist in vorteilhafter Weise mehrfach unterteilt, so daß sich eine Vielzahl von Ringkammern bilden. Diese können alle zueinander gleich oder unterschiedlich ausgebildet sein. Das wenigstens eine Kolbenelement ist gemäß einem vorteilhaften Vorschlag der Erfindung in Form eines Radialsteges an einem Ring ausgebildet. Sowohl die Ringkammer als auch der oder die Radialstege sind in vorteilhafter Weise an Ringelementen ausgebildet. Mit besonderem Vorteil werden die Ringelemente buchsenförmig ausgestaltet, wobei das Kammerelement und das Stegelement ineinandersteckbar sind. Mit Vorteil wird vorgeschlagen, daß eine der Buchsen an der Eingangswelle befestigt ist. Im Falle, daß das gattungsgemäße Lenkventil über ein Ventilelement in Form einer Ventilhülse verfügt, wird gemäß einem Vorschlag der Erfindung die jeweils andere Buchse an der Ventilhülse befestigt.

Das in der beschriebenen Weise gebildete Ringzylinderelement kann somit als Drehschwingungsdämpfer verwendet werden. Ferner kann bei Einsatz eines Fluids mit steuerbarer, variabler Viskosität, das Ringzylinderelement alternativ oder zusätzlich als Reaktions- und/oder Zentrierelement verwenden werden, da das entstehende Reaktionsmoment u.a. eine Funktion der Viskosität des Fluids ist.

Denkbar wäre diesbezüglich der Einsatz eines elektro-rheologischen Fluids.

Mit der Erfindung wird ein gattungsgemäßes Lenkventil um eine einfach aufgebaute und montierbare Vorrichtung ergänzt, die insbesondere das Lenkventil gegen Störgrößen wie Drehschwingungsanregungen unempfindlich macht.

Weitere Vorteile und Merkmale der Erfindung ergeben sich aus der folgenden Beschreibung anhand der Figuren. Dabei zeigen:
- Fig. 1: eine Schnittdarstellung eines Ausführungsbeispieles eines Lenkventils;
- Fig. 2: eine Detaildarstellung an der Stelle II gemäß Fig. 1
- Fig. 3: eine Schnittdarstellung eines Ausführungsbeispieles eines Ringzylinderelementes;
- Fig. 4: eine Schnittdarstellung entlang der Linie IV-IV in Fig. 3;
- Fig. 5: eine Darstellung eines Ausführungsbeispieles eines Ringkammerelementes und
- Fig. 6: eine Darstellung eines Ausführungsbeispieles eines Ringkolbenelementes.

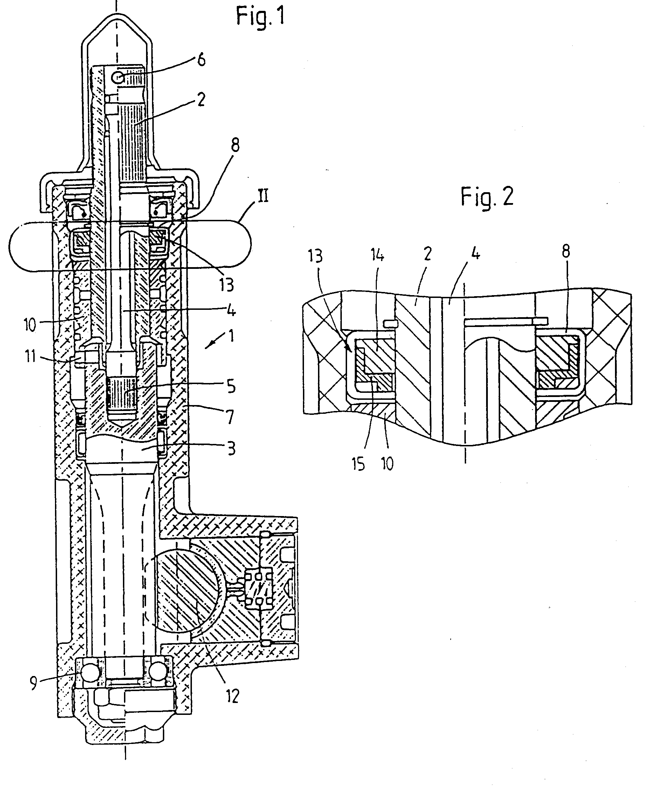

Das in Fig. 1 gezeigte Lenkventil 1 besteht aus einer Eingangswelle 2 und einer Ausgangswelle 3, welche im gezeigten Ausführungsbeispiel mittels eines Torsionsstabes 4 in Abhängigkeit von der Federsteifigkeit des Torsionsstabes zueinander relativbeweglich verbunden sind. Der Torsionsstab 4 ist im Verbindungsbereich 5 in die Ausgangswelle 3 eingesetzt und im Verbindungsbereich 6 mit der Eingangswelle 2 durch einen Stift verbunden. Die Anordnung ist in ein Gehäuse 7 eingesetzt und mittels Lagern 8 und 9 drehbar gelagert. Die Eingangswelle 2 ist mit einer nicht gezeigten Lenksäule/-rad verbunden. Eine Ventilhülse 10 ist die Eingangswelle 2 umgebend im Verbindungsbereich 11 mit der Ausgangswelle verbunden. Bei einer Relativbewegung der Eingangswelle 2 relativ zur Ausgangswelle 3 und damit auch zur Ventilhülse 10 werden Steuernuten relativ zueinander bewegt, so daß Hydraulikdruck einem nicht gezeigten Hydraulikmotor zugeführt wird. Die Ausgangswelle 3 ist zugleich mit einer nicht weiter dargestellten Zahnstangenlenkung 12 im Eingriff.

Parallel zum Lager 8 oder hierein integriert ist ein Ringzylinderelement 13 angeordnet, welches in der Detaildarstellung in Figur 2 gezeigt ist. Ein Ringkolbenelement 14 ist drehfest mit der Steuerhülse 10 verbunden oder gar in ihr integriert, während ein Ringkammerelement 15 drehfest mit der Eingangswelle verbunden ist und sich und somit die Eingangswelle über das Dämpferelement mittels des Lagers 8 am Gehäuse abstützt.

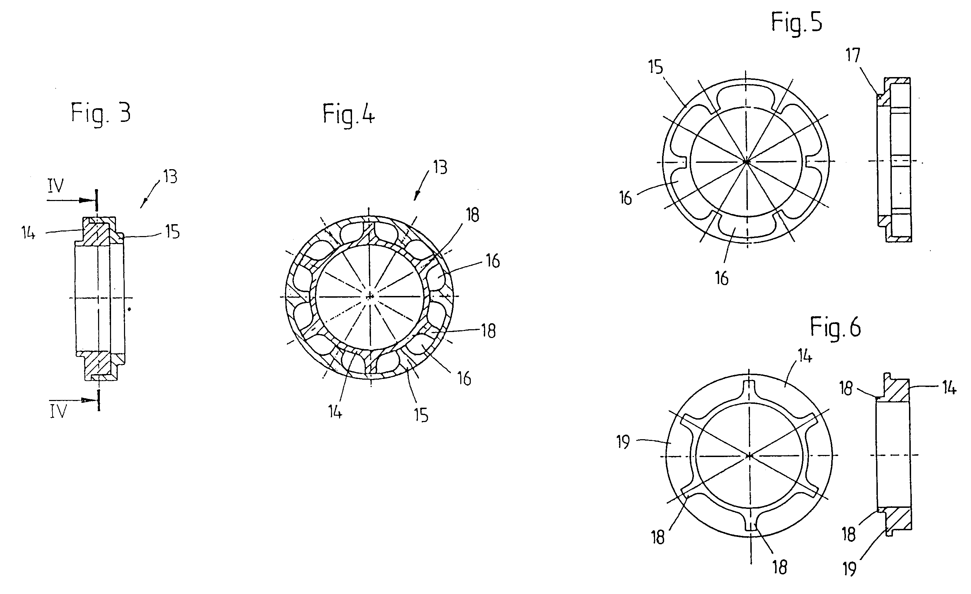

In den Figuren 3 bis 6 sind die einzelnen Elemente des Ringzylinderelementes 13 dargestellt.

Das Ringzylinderelement 13 besteht aus dem Ringkolbenelement 14 und dem Ringkammerelement 15. Das Ringkolbenelement 14 ist in Form eines Ringelementes ausgebildet, welches radial abstehende Kolben 18 aufweist. Darüber hinaus ist eine deckelartige Erweiterung 19 ausgearbeitet.

Das Ringkammerelement 15 weist seinerseits eine Mehrzahl von Kammern 16 auf, die in den Ring eingearbeitet sind. Es bleibt somit in Axialrichtung gesehen ein Boden 17 stehen. Im gezeigten Ausführungsbeispiel sind insgesamt sechs Kammern 16 und sechs Kolben 18 ausgebildet. Diese lassen sich, wie in Fig. 4 gezeigt, ineinander passen, so daß sich insgesamt sechs Ringzylinder ergeben. Jene sind mit viskosem Fluid gefüllt, so daß sich bei kleinster, jedoch hochfrequenter Auslenkung der Eingangswelle bzw. des Kolbens aufgrund der Inkompressibilität des Fluids ein Reaktionsdruck im Zylinder aufbaut, der über den Kolben ein Reaktionsmoment erzeugt, der die Drehschwingungsanregung dämpft. Bei niederfrequenter Auslenkung, wie jene der üblichen Lenkbewegung, baut sich in den Zylindern wegen der Leckagespalte zwischen Zylinder und Kolben und ggf. jener zur Umgebung kein wesentlicher Reaktionsdruck auf, der die Funktionskennung des Lenkgetriebeventils negativ beeinflussen könnte. Das in der beschriebenen Weise gebildete Ringzylinderelement kann somit als Drehschwingungsdämpfer verwendet werden. Ferner kann bei Einsatz eines Fluids mit steuerbarer, variabler Viskosität, das Ringzylinderelement alternativ oder zusätzlich als Reaktions- und/oder Zentrierelement verwendet werden, da das entstehende Reaktionsmoment u.a. eine Funktion der Viskosität des Fluids ist.

Im vorliegenden Beispiel ist die Dämpferanordnung in das Lager 8 der Eingangswelle integriert, jedoch können auch andere Positionen geeignet sein, sofern keine Baulängenvergrößerung damit verbunden ist und weitere Lagerpositionen ohnehin vorhanden sind.

### Bezugszeichenliste

- 1: Lenkventil
- 2: Eingangswelle
- 3: Ausgangswelle
- 4: Torsionsstab
- 5: Verbindungsbereich
- 6: Verbindungsbereich
- 7: Gehäuse
- 8: Lager
- 9: Lager
- 10: Ventilhülse
- 11: Verbindungsbereich
- 12: Zahnstange
- 13: Ringzylinderelement
- 14: Ringkolbenelement
- 15: Ringkammerelement
- 16: Kammer
- 17: Boden
- 18: Kolben
- 19: Deckel

## Patentansprüche

1. Lenkventil (1) zur Versorgung eines Steligliedes mit Hydraulikdruck, bestehend aus einer in einem Gehäuse angeordneten Eingangswelle (2), einer Ausgangswelle (3), einem zentrierenden Federelement und einem Ventilelement,
**dadurch gekennzeichnet**,
daß das Lenkventil wenigstens eine kreisbogenförmig verlaufende, im wesentlichen koaxiale und mit Fluid gefüllte Kammer (16) aufweist, in welcher wenigstens ein Kolbenelement (18) auf einer im wesentlichen kreisförmigen Bahn bewegbar angeordnet ist, wobei die Kammer und/oder das Kolbenelement ein Teil eines zwischen einer der Wellen (2, 3) und dem Gehäuse (7) angeordneten Lagers (8, 9) bilden.

2. Lenkventil nach Anspruch 1, dadurch gekennzeichnet, daß die wenigstens eine Kammer als Ringkammer ausgebildet ist.

3. Lenkventil nach Anspruch 2, dadurch gekennzeichnet, daß die Ringkammer in mehrere Kammern (16) unterteilt ist.

4. Lenkventil nach einem der vorhergehenden Ansprüche, dadurch gekennzeichnet, daß der wenigstens eine Kolben als Radialsteg an einem Ring ausgebildet ist.

5. Lenkventil nach einem der vorhergehenden Ansprüche, dadurch gekennzeichnet, daß die Kammern (16) und die Kolben (18) an ineinander einsetzbaren Ringelementen ausgebildet sind.

6. Lenkventil nach einem der vorhergehenden Ansprüche, dadurch gekennzeichnet, daß die Kammern (16) und die Kolben (18) an ineinander verschachtelbaren Buchsen ausgebildet sind.

7. Lenkventil nach einem der vorhergehenden Ansprüche, dadurch gekennzeichnet, daß das die Kammern aufweisende Element an der Eingangswelle befestigt ist.

8. Lenkventil nach einem der vorhergehenden Ansprüche, dadurch gekennzeichnet, daß es als Ventilelement eine Ventilhülse aufweist, und das die Kolben aufweisende Element an der Ventilhülse (10) befestigt oder integriert ist.

9. Lenkventil nach einem der vorhergehenden Ansprüche, dadurch gekennzeichnet, daß die Kammer mit viskosem Fluid gefüllt ist.

10. Lenkventil nach einem der Ansprüche 1 bis 9, dadurch gekennzeichnet, daß die Kammer mit einem Fluid von steuerbarer, variabler Viskosität gefüllt ist.

## Claims

1. Steering valve (1) for supplying an actuator with hydraulic pressure, comprising an input shaft (2) disposed in a housing, an output shaft (3), a centring spring element and a valve element,
characterized in
that the steering valve has at least one substantially coaxial, fluid-filled chamber (16), which extends in the shape of an arc and in which at least one piston element (18) is disposed so as to be movable along a substantially circular path, the chamber and/or the piston element forming a part of a bearing (8, 9) disposed between one of the shafts (2, 3) and the housing (7).

2. Steering valve according to claim 1, characterized in that the at least one chamber takes the form of an annular chamber.

3. Steering valve according to claim 2, characterized in that the annular chamber is subdivided into a plurality of chambers (16).

4. Steering valve according to one of the preceding claims, characterized in that the at least one piston takes the form of a radial web on a ring.

5. Steering valve according to one of the preceding claims, characterized in that the chambers (16) and the pistons (18) are formed on annular elements which are insertable one into the other.

6. Steering valve according to one of the preceding claims, characterized in that the chambers (16) and the pistons (18) are formed on bushes which are nestable one in the other.

7. Steering valve according to one of the preceding claims, characterized in that the element having the chambers is fastened to the input shaft.

8. Steering valve according to one of the preceding claims, characterized in that it has, as a valve element, a valve sleeve and the element having the pistons is fastened to or integrated in the valve sleeve (10).

9. Steering valve according to one of the preceding claims, characterized in that the chamber is filled with viscous fluid.

10. Steering valve according to one of claims 1 to 9, characterized in that the chamber is filled with a fluid of controllable, variable viscosity.

## Revendications

1. Soupape de direction (1), destinée à alimenter un organe de réglage en pression hydraulique, composée d'un arbre d'entrée (2) disposé dans un boîtier, d'un arbre de sortie (3), d'un élément ressort de centrage et d'un élément de soupape,
caractérisée en ce que la soupape de direction comporte au moins une chambre (16) s'étendant selon un arc de cercle, essentiellement coaxiale, et remplie de fluide, chambre dans laquelle au moins un élément de piston (18) est disposé de façon mobile suivant une trajectoire essentiellement circulaire, la chambre et/ou l'élément de piston formant une partie d'un palier (8, 9) disposé entre l'un des arbres (2, 3) et le boitier (7).

2. Soupape de direction selon la revendication 1, caractérisée en ce que ladite au moins une chambre est réalisée sous forme d'une chambre annulaire.

3. Soupape de direction selon la revendication 2, caractérisée en ce que la chambre annulaire est divisée en plusieurs chambres (16).

4. Soupape de direction selon l'une des revendications précédentes, caractérisée en ce que ledit au moins un piston est réalisé sous forme d'une barrette radiale aménagée sur une bague.

5. Soupape de direction selon l'une des revendications précédentes, caractérisée en ce que les chambres (16) et les pistons (18) sont conformés dans/sur des éléments annulaires pouvant être emboîtés les uns dans les autres.

6. Soupape de direction selon l'une des revendications précédentes, caractérisée en ce que les chambres (16) et les pistons (18) sont conformés dans/sur des douilles pouvant être emboîtées les unes dans les autres.

7. Soupape de direction selon l'une des revendications précédentes, caractérisée en ce que l'élément comportant les chambres est fixé sur l'arbre d'entrée.

8. Soupape de direction selon l'une des revendications précédentes, caractérisée en ce qu'elle comporte une douille de soupape constituant l'élément de soupape, et en ce que l'élément comportant les pistons est fixé sur ou intégré à la douille de soupape (10).

9. Soupape de direction selon l'une des revendications précédentes, caractérisée en ce que la chambre est remplie d'un fluide visqueux.

10. Soupape de direction selon l'une des revendications 1 à 9, caractérisée en ce que la chambre est remplie d'un fluide d'une viscosité réglable variable.
